## Europäisches Patentamt

## European Patent Office

## Office européen des brevets

(11) Veröffentlichungsnummer: **0 143 882**
**B1**

(12) # EUROPÄISCHE PATENTSCHRIFT

(45) Veröffentlichungstag der Patentschrift:
23.11.88

(51) Int. Cl.⁴: **B 27 D 5/00**

(21) Anmeldenummer: **84108298.5**

(22) Anmeldetag: **14.07.84**

(54) **Verfahren zur Anbringung eines mit einem Deckstreifen beschichteten, soft-geformten Kantenprofils an plattenförmige Werkstücke und Vorrichtung zum Abschneiden des Deckstreifens.**

(30) Priorität: **05.10.83 DE 3336275**
**09.12.83 DE 3344512**

(43) Veröffentlichungstag der Anmeldung:
**12.06.85 Patentblatt 85/24**

(45) Bekanntmachung des Hinweises auf die Patenterteilung:
**23.11.88 Patentblatt 88/47**

(84) Benannte Vertragsstaaten:
**BE FR GB IT NL SE**

(56) Entgegenhaltungen:
**DE-A-1 919 102**
**DE-A-2 810 565**
**DE-A-3 111 985**

(73) Patentinhaber: **IMA- Norte Maschinenfabriken Klessmann GmbH & Co., Am Ölbach 19, D-4830 Gütersloh 1 (DE)**

(72) Erfinder: **Riesmeier, Wilhelm, Ing. grad., Franz- Liszt- Strasse 5, D-4990 Lübbecke 1 (DE)**

(74) Vertreter: **Elbertzhagen, Otto, Patentanwälte Thielking & Elbertzhagen Gadderbaumer Strasse 20, D-4800 Bielefeld 1 (DE)**

EP 0 143 882 B1

**Beschreibung**

Die Erfindung bezieht sich auf ein Verfahren zur Anbringung eines nicht ebenen, sogenannten soft-geformten Kantenprofils und eines Deckstreifens aus Furnierholz oder Kunststoff darauf an die über Eck stehenden Kanten quadratischer oder rechteckiger plattenförmiger Werkstücke aus Holz oder holzähnlichem Werkstoff gemäß dem Gattungsbegriff des Patentanspruchs 1 sowie auf Vorrichtungen zum Abschneiden der Deckstreifen an den Werkstückecken gemäß den Gattungsbegriffen der Patentansprüche 2 und 3.

Die nicht ebenen, sogenannten soft-geformten Kantenprofile werden vornehmlich bei Möbelfrontplatten verwendet, die beispielsweise aus einem oberflächenbeschichteten Spanplattenmaterial bestehen. Es handelt sich dabei um solche Kantenprofile, die in eine ebene Sichtfläche der Möbelfrontplatten sanft übergehen, die also zumindest zur ebenen Frontseite solcher Möbelteile hin einen Bereich haben, welcher gegenüber dieser ebenen Vorderseite nur einen geringen Neigungswinkel hat. Zu den Schmalseiten der Werkstücke hin können die Kantenprofile mit einem größeren Neigungswinkel abfallen, wobei dieser Neigungswinkel im Endbereich etwa senkrecht zu der ebenen Frontseite der Werkstücke steht. In der Regel ändert sich der Verlauf des Neigungswinkels des Kantenprofils über den Randquerschnitt der plattenförmigen Werkstücke, wodurch konvexe, konkave oder abwechselnde Wölbungen der Kantenprofile erzielt werden können.

Besondere Schwierigkeiten bereitet bei solchen plattenförmigen Werkstücken mit soft-geformten Kantenprofilen die Anbringung des Deckstreifens auf das Kantenprofil, wenn der Deckstreifen an der Gehrungskante, die sich zwischen zwei profilierten Werkstückkanten an der betreffenden Werkstückecke ausbildet, sauber abgelängt werden soll. Nach einem allgemein bekannten Verfahren der eingangs genannten Art werden jeweils sogleich nach dem Fräsen der betreffenden Werkstückkanten an das Kantenprofil die Deckstreifen angefahren, wobei dann beim nachfolgenden Fräsen der quer dazu verlaufenden Werkstückkanten die zuerst angebrachten Deckstreifen an den Werkstückecken mit abgefräst werden. Wenn danach an die Querkanten die Deckstreifen angefahren sind, wird der Überstand dieser zuletzt an die Werkstückkanten angefahrenen Eckstreifen im Bereich der Werkstückecken mittels eines Formfräsers weggefräst, wonach noch mit einem Andrückaggregat etwaig vorstehende Fräskanten des Deckstreifens an den Werkstückecken fest angepreßt werden. Der gravierende Nachteil dieses Verfahrens liegt darin, daß trotz einer hohen Bearbeitungsgenauigkeit der Fräs- und Andrückaggregate die an den Werkstückecken zusammengefügten Eckstreifen keine exakt mit der Gehrungskante verlaufende Stoßnaht bilden, sondern einen undefinierten Verlauf haben, welcher die Optik der fertigen Möbelplatten beeinträchtigt.

Der Erfindung liegt deshalb die Aufgabe zugrunde, das gattungsgemäße Verfahren zur Anbringung eines soft-geformten Kantenprofils und eines Deckstreifens darauf an die plattenförmigen Werkstücke zu verbessern, an den Werkstückecken die Eckstreifen exakt entlang der Gehrungskante, die sich durch die an den Werkstücke ecken zusammenlaufenden Kantenprofile ergibt, zusammenfügen zu können.

Diese Aufgabe wird bei einem gattungsgemäßen Verfahren nach der Erfindung dadurch gelöst, daß zuerst die einen parallelen Werkstückkanten gefräst, dann die quer dazu verlaufenden Werkstückkanten gefräst werden und an deren Kantenprofil der Deckstreifen mit Überstand über die durch die an den Werkstückecken zusammenlaufenden Kantenprofile gebildeten Gehrungskanten angefahren sowie entlang einer Schnittebene abgeschnitten wird, die durch die Gehrungskante und eine senkrechte zur Werkstückplattenebene definiert ist, und anschließend an das Kantenprofil der zuerst gefrästen Werkstückkanten der Deckstreifen angefahren sowie entlang dieser Schnittebene an den Werkstückecken abgeschnitten wird.

Wenn nach dem erfindungsgemäßen Verfahren auch die zuerst befrästen Werkstückkanten nicht sogleich mit den Deckstreifen beschichtet werden und dafür ein zusätzlicher Arbeitsgang erforderlich wird, überwiegen insgesamt die erreichten Vorteile erheblich, weil an den Werkstückecken die Deckstreifen exakt in Gehrungsrichtung trotz beliebigen Kantenprofils sauber abgeschnitten und zusammengefügt werden können und nicht noch nachträgliche Bearbeitungsvorgänge zum Versäubern der Werkstückecken erforderlich sind. Dabei wird ferner vermieden, daß sich die Deckstreifen an den Werkstückecken übereinanderlegen und somit der eine Deckstreifen auf den anderen geklebt werden würde. Vielmehr werden entlang der Gehrungskanten die Deckstreifen nur mit der gefrästen Kante der Werkstücke verklebt. Dabei schadet es auch nicht, wenn die Stanzvorrichtung entlang der Profilkante im Plattenmaterial einen Einschnitt hinterläßt, denn dieser schafft zusätzlich Platz für die Aufnahme eines geringen Materialstaus, der sich an den Schnittkanten der Deckstreifen ergeben kann.

Zur Durchführung des erfindungsgemäßen Verfahrens wird eine Vorrichtung benötigt, mit der die Überstände der an die gepreßten Werkstückkanten angefahrenen Deckstreifen abgetrennt werden können. Das deutsche Gebrauchsmuster DE-U-8 313 881 beschreibt eine solche Vorrichtung zur Bearbeitung der Stoßränder der im Winkel aneinandergestoßenen Deckstreifen, jedoch wird hierfür ein jeweils entlang der Gehrungskante geführtes Fräswerkzeug verwendet, das naturgemäß die aneinanderstoßenden Ränder der Deckstreifen anschrägt, weshalb sich keine exakt entlang der Gehrungslinie verlaufende Eckkante ergeben kann, womit sich ein undefinierter Verlauf der Stoßfuge an der Gehrungskante begründet.

In Ausgestaltung der Erfindung wird deshalb eine Vorrichtung verwendet, mit der die Deckstreifen an den Werkstückecken exakt entlang der Profilkante zwischen den zusammenlaufenden Kantenprofilen abgeschnitten werden können.

Diese Vorrichtung wird in einer ersten Ausführungsform so gestaltet, daß über einer Werkstückauflage senkrecht oder geneigt zur Auflageebene ein verschiebliches und auf die Gehrungskante an den Werkstückecken auf der Werkstückauflage ausrichtbares Stanzmesser mit einer Schneide angeordnet ist, wobei die Kontur der Schneide das Negativprofil der Gehrungskante an den Werkstückecken ist.

Eine andere Ausführungsform dieser Vorrichtung besteht in einem über der Werkstückauflage senkrecht oder geneigt zur Auflageebene verschieblichen und auf die Gehrungskante an den Ecken der auf der Werkstückauflage aufliegenden Werkstücke ausrichtbaren Schneidmesser, wobei die Schneide bzw. der in Eingriff stehende Schneidenabschnitt des Messers kürzer als die Schnittkante am Deckstreifen entlang der Gehrungskante ist und das Messer an zumindest einer zur Werkstückauflage parallelen Führung in Richtung der Gehrungskante verschieblich gelagert und mittels einer Hubvorrichtung senkrecht zur Werkstückplattenebene zustellbar ist.

Sowohl die Stanzvorrichtung als auch die Schneidvorrichtung können in eine Durchlaufmaschine integriert sein. Dabei ist es möglich, die Stanzvorrichtung oder die Schneidvorrichtung mit den Werkstücken mitlaufend zu führen und im Arbeitsspielintervall wieder zur Ausgangsposition zurückzuführen.

Grundsätzlich hat gegenüber der Stanzvorrichtung mit dem Stanzmesser die Schneidvorrichtung mit dem Schneidmesser insoweit einen Vorteil, als das Stanzmesser jeweils so lang sein muß wie die jeweilige Gehrungskante, dabei besitzt die entsprechend lange Konturenschneide einen komplizierten Schliff, und es muß für jedes individuell geformte Kantenprofil ein daran angepaßtes Stanzmesser vorgesehen werden. Dagegen ermöglicht die Schneidvorrichtung mit dem entlang der Gehrungskante verfahrbaren Schneidmesser eine einfacher gestaltete, für alle Einsatzfälle Universell verwendbare Messerschneide. Dafür ist allerdings eine aufwendigere Messerführung erforderlich, weil das Messer entlang der Schnittlinie bewegt werden muß. Dafür können an jeder Stelle der Schnittlinie optimale Schnittbedingungen erzielt werden, beispielsweise kann die Form der Messerschneide leicht an sehr steile Schnittkonturen angepaßt werden. Die Führung und Zustellung des Schneidmessers erfolgt über geeignete Hilfsantriebe, die über ein Programm gesteuert werden können.

Die Erfindung wird nachfolgend anhand der Zeichnung an Ausführungsbeispielen noch näher erläutert. Dabei zeigen:

Fig. 1 eine perspektivische Darstellung eines plattenförmigen Werkstücks mit einem längs der Kanten angefrästen Soft-Form-Profil,

Fig. 2 dasselbe Werkstück nach Fig. 1 in gleicher Darstellung nach der Anbringung von Deckstreifen auf die Längskanten,

Fig. 3 dasselbe Werkstück nach der Anbringung weiterer Deckstreifen auf die Querkanten,

Fig. 4 dasselbe Werkstück mit einer schematisch darüber angeordneten, eckseitigen Stanzvorrichtung,

Fig. 5 die Draufsicht auf eine Durchlaufmaschine zur Bearbeitung von Werkstücken gem. den Fig. 1 bis 4, wobei der jeweilige Bearbeitungsvorgang an den einzelnen Bearbeitungsstationen daneben nochmals schematisch dargestellt ist, und

Fig. 6 eine der Fig. 4 entsprechende Darstellung, jedoch mit einer Schneidvorrichtung anstelle der Stanzvorrichtung.

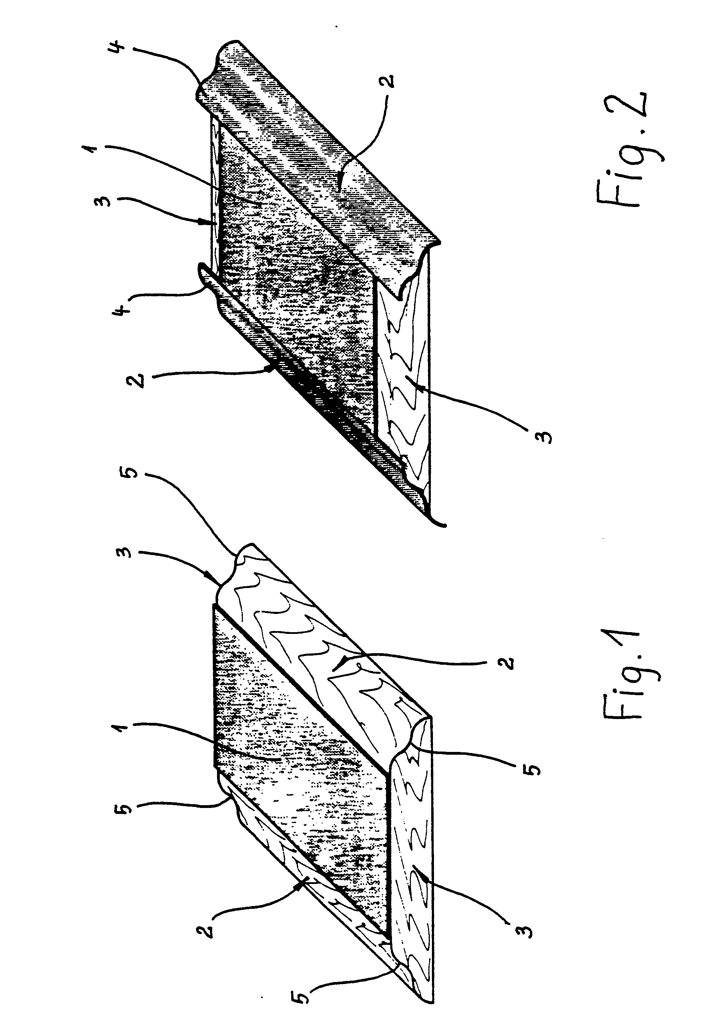

In Figur 1 erkennt man ein plattenförmiges Werkstück 1 von rechteckiger Grundform, das aus Spanplattenmaterial besteht und an seiner Oberseite und seiner Unterseite mit einer nicht näher bezeichneten Oberflächen-Deckschicht versehen ist. An die parallelen Kanten 2 und 3 des Werkstücks 1 ist bereits ein sogenanntes Soft-Form-Profil angefräst, das in die ebene Oberseite des Werkstücks 1 flach ausläuft und im Kantenquerschnitt gesehen abwechselnd Konkav- und Konvexwölbungen aufweist. Zum Rand des Werkstücks hin fällt das an allen Kanten 2, 3 identische Kantenprofil steiler ab. Die Kanten 2 und 3 des Werkstücks 1 werden in einer Durchlaufmaschine in sogenannter Längsbearbeitung und Querbearbeitung befräst, wobei zunächst die einen zueinander parallelen Kanten 3, die sogenannten Querkanten des Werkstücks 1, befräst und dann nach Drehung des Werkstücks 1 um 90 Grad an die sogenannten Längskanten 2 das Kantenprofil angefräst wird.

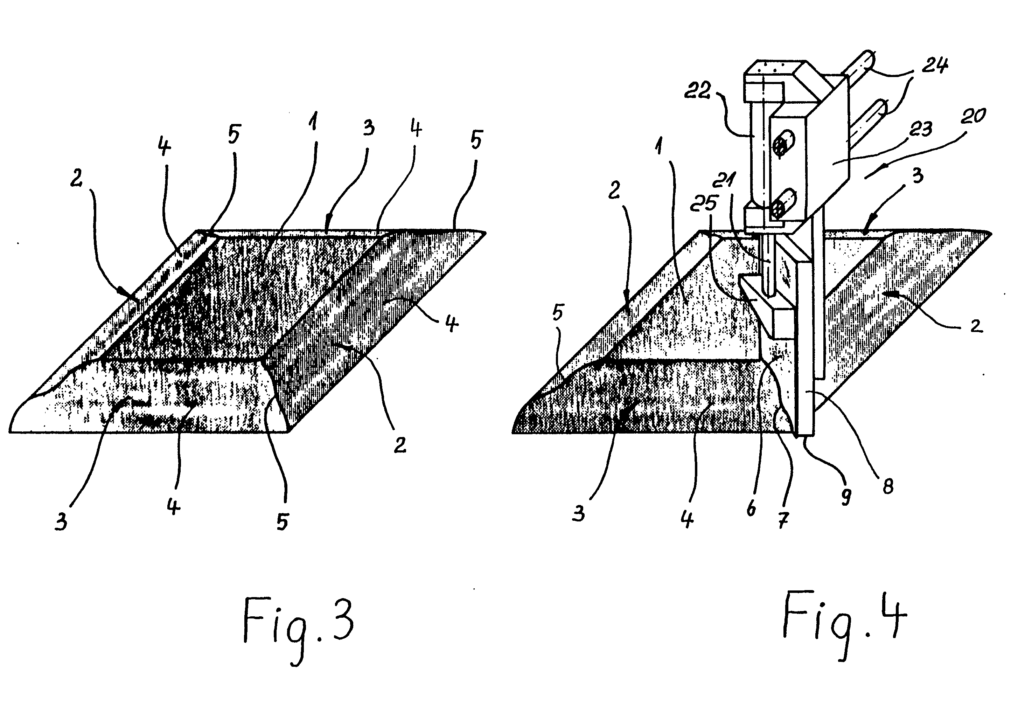

An die zuletzt gefrästen Kanten 2 wird dann jeweils ein Deckstreifen 4 angefahren, der eng an das Kantenprofil der Kante 2 angeschmiegt und mit dieser sogleich verklebt wird. Dies zeigt Figur 2, die ferner deutlich macht, daß die Deckstreifen 4 an beiden Enden über die Gehrungskante 5 (Figur 1), die sich durch die an den Werkstückecken zusammenlaufenden Kantenprofile bildet, überstehen. Die Deckstreifen 4 werden daher, bevor noch auf die zuerst gefrästen Querkanten 3 weitere Deckstreifen aufgefahren werden, entlang den Gehrungskanten 5 an den Ecken des Werkstücks 1 abgestanzt, wozu eine Stanzvorrichtung 20 dient, die schematisch in Figur 4 wiedergegeben ist.

Wesentliches Element der Stanzvorrichtung 20 ist ein Stanzmesser 6 mit einer Schneide 7, welche als Formschneide ausgebildet ist und die Negativkontur der Gehrungskanten 5 des Werkstücks 1 darstellt. Das Messer 6 ist senkrecht zur Ebene des Werkstücks 1 verschieblich, das mit der betreffenden Ecke mit seiner Gehrungskante 5 so auf die Messerschneide 7 ausgerichtet wird, daß die Kontur der Messerschneide 7 zu der der jeweiligen Profilkante 5 äquidistant angeordnet ist. Dies kann durch eine geeignete Auflage für das Werkstück 1 und entsprechende Anschläge sichergestellt werden. Danach wird das Stanzmesser 6 soweit gegen das Werkstück 1 niedergefahren bis der jeweilige Überstand des Deckstreifens 4 entlang der Profilkante 5 völlig abgeschnitten ist.

Damit eine innigere Verbindung zwischen dem klebenden Deckstreifen 4 und dem Material des Werkstücks 1 entlang der Profilkante 5 erreicht wird, sitzt auf der dem Deckstreifen 4 zugewandten Seite des Messers 6 ein Preßstück 8 mit einer unterseitigen Preßkante 9, welche eine wiederum zur Gehrungskante 5 des Werkstücks 1 negative Kontur hat, jedoch gegenüber der Schneide 7 des Messers 6 um die Dicke des Deckstreifens 4 zurückversetzt ist. Somit kann sogleich mit dem Niederdrücken des Messers 7 die Schnittkante des Eckstreifens 4 entlang der Gehrungskante 5 gegen das Werkstück 1 verpreßt werden.

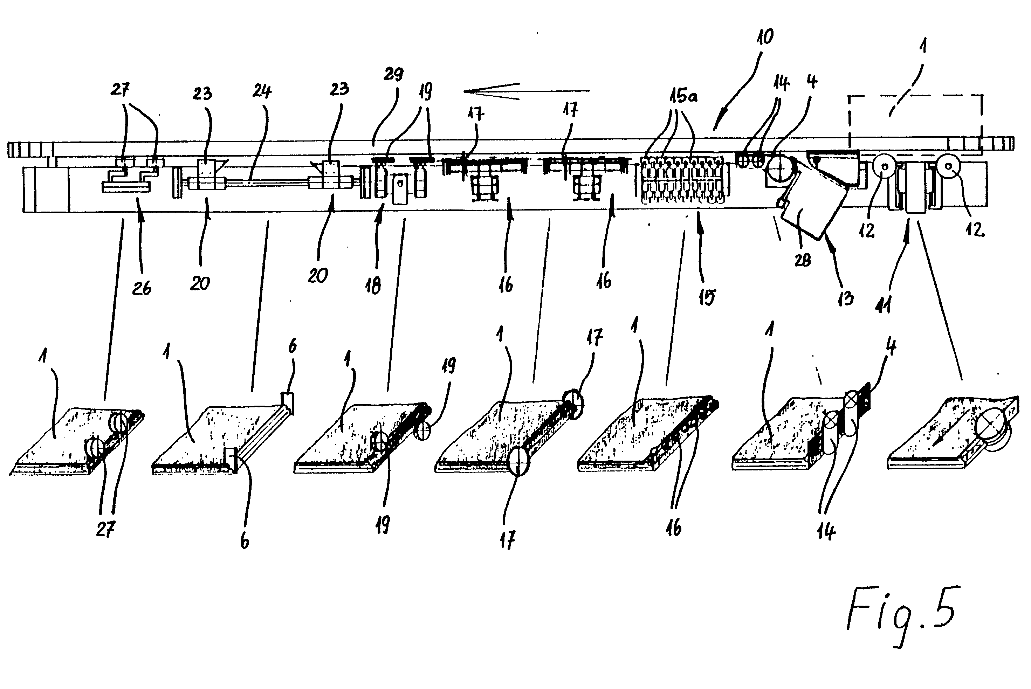

Erst wenn die Deckstreifen 4 an den profilierten Längskanten 2 des Werkstücks 1 beidendig abgestanzt sind, werden die beiden weiteren Deckstreifen 4 an die zuerst gefrästen Querkanten 3 des Werkstücks 1 angefahren. Auch die auf das Profil der Querkanten 3 aufgefahrenen Deckstreifen 4 stehen zunächst beidendig über die Gehrungskanten 5 an den Werkstückecken über und werden in analoger Weise wie die Deckstreifen 4 an den Werkstücklängskanten 2 entlang den Gehrungskanten 5 abgestanzt. Das kann mit derselben oder mit einer weiteren Stanzvorrichtung 20 erfolgen, wobei die betreffende Stanzvorrichtung 20 entsprechend dem Ausführungsbeispiel Teil einer in Figur 5 gezeigten Durchlaufmaschine 10 oder auch als separates Bearbeitungsaggregat ausgebildet sein kann.

Im einzelnen umfaßt die Durchlaufmaschine nach Figur 5 ein Förderband oder eine Förderkette 29, die als Auflage für die plattenförmigen Werkstücke 1 dient und kontinuierlich angetrieben wird. Die Werkstücke 1 können auf der Förderkette 29 festgespannt werden, damit sie an allen Bearbeitungsaggregaten der Durchlaufmaschine 10 exakt ausgerichtet sind. Zusätzlich kann oberhalb der Förderkette 29 noch eine mitlaufende Abstützvorrichtung für die Werkstücke 1 vorgesehen sein, die jedoch in der Zeichnung nicht näher dargestellt ist.

In Durchlaufrichtung gesehen besitzt die Maschine 10 als erstes eine Fräsvorrichtung 11, die zwei gegenläufig angetriebene Formfräser 12 umfaßt, mit denen das Soft-Form-Profil an die jeweils vorbeilaufende Kante der Werkstücke 1 angefrast wird. Danach folgt eine Station 13 zur Angabe des Deckstreifens 4 an die profilierte Kante des betreffenden Werkstücks 1. Der Deckstreifen 4 wird von einem endlosen Vorraut aus einem Magazin 28 abgezogen und mittels Druckrollen 14 zunächst in vertikaler, ebener Ausrichtung an die betreffende Kante des Werkstücks 1 angefahren. Eine nachfolgende Andrückvorrichtung 15 besitzt eine Vielzahl von Druckrollen 15a die entsprechend dem Kantenprofil der Werkstücke 1 ausgerichtet sind, um den Deckstreifen 4 an das Kantenprofil des Werkstücks 1 anzuschmiegen. Danach passieren die Werkstücke 1 Kappstationen 16, die mit senkrecht zur Durchlaufrichtung verfahrbaren Kappsägeblättern 17 ausgestattet sind, mittels denen der Deckstreifen 4 etwa fluchtend zu den Querkanten, die senkrecht zu der jeweils zu bearbeitenden Werkstückkante liegen, abgelängt wird. Danach steht der Deckstreifen noch über die Gehrungskante 5 an den Werkstückecken über, wie es in Figur 2 gezeigt ist.

In einer Besäumstation 18 wird dann der Deckstreifen 4 an der zu bearbeitenden Werkstückkante ober- und unterseitig des Werkstücks bündig mittels geeigneter Fräser 19 abgefräst.

Danach passiert das Werkstück 1 die Stanzvorrichtung 20, die in ihren wesentlichen Elementen auch in Figur 4 gezeigt ist. Das Stanzmesser sitzt in einer geeigneten Werkzeugaufnahme 25, die über eine Schubstange 21 geführt ist, welche als Kolbenstange eines Hydraulikzylinders 22 ausgebildet ist. Dieser Zylinder 22 sitzt an einem Schlitten 23, der an Längsführungen 24 parallel zur Transportkette 29 gelagert ist. Zweckmäßig sitzen jeweils zwei solcher Stanzvorrichtungen 20 an den Längsführungen 24, um zugleich beide Ecken des Werkstücks 1 an der beschichteten Kante bearbeiten zu können. Die Schlitten 23 werden während des Stanzvorganges synchron mit dem jeweiligen Werkstück 1 auf der Transportkette 29 mitgeführt, um im Intervall zwischen den Arbeitsspielen wieder in eine Ausgangsposition entgegen der Förderrichtung zurückzulaufen.

Auf die Stanzvorrichtungen 20 folgt am Ende der Durchlaufmaschine 10 noch eine weitere Anpreßstation 26 mit Druckrollen 27, die von oben her auf denjenigen Abschnitt der mit dem Deckstreifen 4 beschichteten Profilkante drücken, der flach an die ebene Oberseite der Werkstücke 1 anschließt, um hier insbesondere zu den Werkstückecken hin nochmals für eine besonders innige Verbindung zwischen dem klebenden Deckstreifen 4 und dem ausgefrästen Material der Werkstücke 1 zu sorgen.

Grundsätzlich können die Stanzvorrichtungen 20 auf beliebige Gehrungswinkel ausgerichtet werden. Da die Gehrungen bzw. hier die Gehrungskanten 5 an den Werkstückecken in der Regel in Richtung der Winkelhalbierenden der Eckwinkel liegen, sind die Stanzvorrichtungen 20 bei den rechtkantigen Werkstücken 1 auf eine 45-Grad-Gehrung eingerichtet und stehen entsprechend mit der Richtung der Messerschneiden 7 (Fig. 4) unter einem Winkel von 45 Grad zur Durchlaufrichtung der Werkstücke 1.

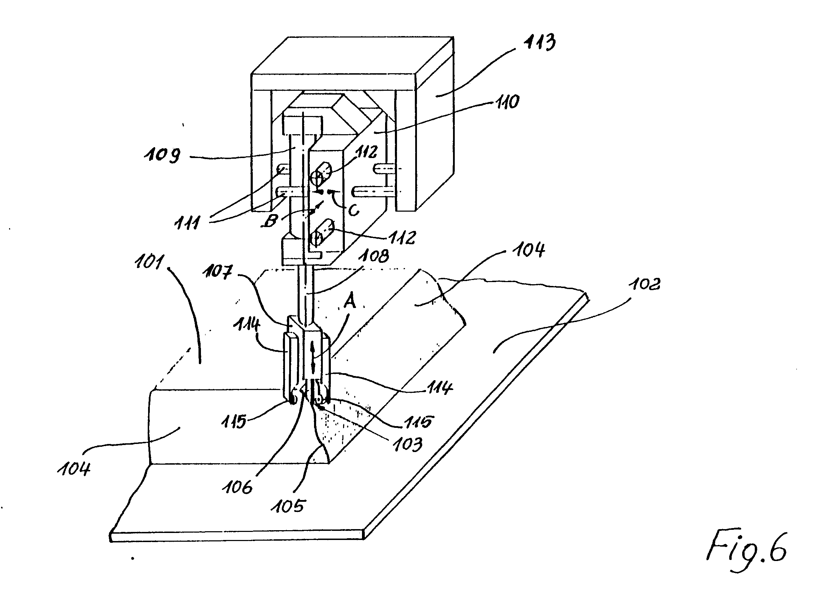

Anstelle der vorbeschriebenen Stanzvorrichtung 20 kann eine Messervorrichtung mit einem Schneidmesser zum Einsatz kommen, wie sie nachstehend anhand von Figur 6 noch näher beschrieben wird.

Figur 6 zeigt eine Werkstückauflage 102, bei der es sich um ein Transportband, eine Transportkette oder einen Tisch handeln kann und die vorzugsweise horizontal ausgerichtet ist. Darauf werden plattenförmige Werkstücke 101 unterhalb einer Bearbeitungsstation zur Auflage gebracht, die an ihren Schmalseiten mit den soft-geformten Kantenprofilen ausgestattet sind.

An die soft-geformten Schmalseiten der Werkstücke 101 sind die Deckstreifen 104 bereits angefahren, die sich an das Kantenprofil anschmiegen. An den rechtwinkligen Ecken der Verkstücke 101 erfolgt die Abtrennung des Überstandes der Deckstreifen 104 exakt an der Gehrungskante 105 mittels eines Messers 106, das entlang der Gehrungskante 105 geführt wird. Dies erfordert einerseits eine Bewegung des Messers 106 in Richtung der Winkelhalbierenden der betreffenden Ecke des Werkstücks 101 und andererseits eine Zustellung des Messers 106 in Richtung zur Werkstückauflage 102 hin entsprechend dem Abfall des Kantenprofils von der Vorderseite der Werkstücke 101 aus.

Das Messer 106 kann eine feststehende Schneide 103 oder eine Schneidrolle besitzen, die exakt entlang der Schnittlinie an der Gehrungskante 105 geführt wird. Das Messer 106 sitzt in einem Messerhalter 107, der, wie es der Pfeil A andeutet, gegenüber der Werkstückauflage 102 senkrecht verschiebbar ist. Dazu ist der Messerhalter 107 über eine Führungsstange 108 mit einer Hubvorrichtung 109 verbunden, die den Messerhalter 107 und damit das Messer 106 beim Schneidvorgang in Richtung zur Werkstückauflage 102 hin beaufschlagt.

Die Hubvorrichtung 109 sitzt an einem Kreuzsupport 110, der über senkrecht zueinander stehenden Führungen 111 und 112 an einem Gestell 113 zweidimensional verschieblich gelagert ist. Dies ist durch die Pfeile B und C verdeutlicht. Dadurch kann das Messer 106 in Richtung einer Parallelebene zur Werkstückauflage 102 beliebig verfahren werden, während andererseits die Zustellung senkrecht zur Ebene der Werkstückauflage 102 über die Hubvorrichtung 109 erfolgt. Dadurch kann das Messer 106, dessen Schneide 103 sich in Richtung der Gehrungskante 105 gesehen nur über einen Bruchteil der Länge der Schnittlinie erstreckt, entlang der von der Oberseite der Werkstücke 101 abfallenden Gehrungskante 105 bewegt werden.

Am Messerhalter 107 sitzen noch zusätzliche Führungselemente 114, die parallel zum Messer 106 nach unten vorstehen. Sie tragen an ihren Unterenden Stützrollen 115 oder -kufen, die sich während des Schneidvorganges entlang einer zur Gehrungskante 105 parallelen Linie auf dem Werkstück 101 abstützen. Über diese Stützrollen 115 kann die Schnittiefe der Messerschneide 103 vorgegeben werden, wobei zumindest dann, wenn die Stützrollen 115 sehr nahe an der Messerschneide 103 angeordnet sind, sie etwa um die Schnittiefe nach oben hin gegenüber der Schneide 103 zurückversetzt sind. Ist der Abstand zwischen den Stützrollen 115 und der Schneide 103 größer, kann entsprechend den abfallenden, über Eck zusammenlaufenden Konturen der Schmalseite des betreffen den Werkstücks 101 auch ein anderer Versatz zwischen der Messerschneide 103 und den Stützrollen 115 erforderlich werden.

Die Stützrollen 115 können auch die Funktion übernehmen, die Deckstreifen 104 entlang der Schnittkante an der Gehrungskante 105 anzudrücken. Unabhängig davon kann auch in Schnittrichtung des Messers 106 gesehen hinter der Messerschneide 103 eine separate Andruckrolle für diesen Zweck vorgesehen sein, die einen seitlichen Versatz gegenüber der Schnittlinie haben muß, um den an die Gehrungskante 105 heranreichenden, abgeschnittenen Deckstreifen 104 erfassen zu können. Diese hinter dem Messer 106 angeordnete Andruckrolle ist in der Zeichnung nicht dargestellt.

**Patentansprüche**

1. Verfahren zur Anbringung eines nicht ebenen, sogenannten soft-geformten Kantenprofils und eines Deckstreifens (4) aus Furnierholz oder Kunststoff darauf an die zueinander über Eck stehenden Kanten (2, 3) quadratischer oder rechteckiger plattenförmiger Werkstücke aus Holz oder holzähnlichem Werkstoff, wie Möbelfrontplatten, mittels einer die Werkstücke (1) im Durchlauf bearbeitenden Maschine, wobei zunächst an der jeweiligen Werkstückkante (2, 3) das Kantenprofil angefräst, dann der Deckstreifen (4) von einem Endlosvorrat unter Anschmiegung an das Kantenprofil angefahren, zugleich aufgeklebt und an den Werkstückecken abgelängt wird, dadurch gekennzeichnet, daß zuerst die einen parallelen Werkstückkanten (3) gefräst, dann die quer dazu verlaufenden Werkstückkanten (2) gefräst werden und an deren Kantenprofil der Deckstreifen (4) mit Überstand über die durch die an den Werkstückecken zusammenlaufenden Kantenprofile gebildeten Gehrungskanten (5) angefahren sowie entlang einer Schnittebene abgestanzt oder - geschnitten wird, die durch die Gehrungskante (5) und eine senkrechte zur Werkstückplattenebene definiert ist, und anschließend an das Kantenprofil der zuerst gefrästen Werkstückkanten (3) der Deckstreifen (4) angefahren sowie entlang einer der oben genannten Schnittebenen an den Werkstückecken abgestanzt oder -geschnitten wird.

2. Verfahren nach Anspruch 1, dadurch gekennzeichnet, daß zum Abstanzen oder Abschneiden eine Stanzvorrichtung (20) mit einem gegenüber einer Werkstückauflage verschieblichen und ausrichtbaren Stanzmesser (6) verwendet wird, dessen Schneide (7) mit der Kontur des Gehrungskante übereinstimmt.

3. Verfahren nach Anspruch 2, dadurch gekennzeichnet, daß neben dem Stanzmesser (6) ein damit zugleich verschiebliches Preßstück (8) angeordnet ist, das zumindest im Bereich unmittelbar neben der Schneide (7) eine gegenüber dieser um die Stärke des Deckstreifens (4) äquidistant zurückversetzte Preßfläche oder -kante (9) hat.

4. Verfahren nach Anspruch 2 oder 3, dadurch gekennzeichnet, daß die Stanzvorrichtung (20) in eine Durchlaufmaschine (10) integriert ist.

5. Verfahren nach Anspruch 4, dadurch gekennzeichnet, daß die Stanzvorrichtung (20) mit den Werkstücken (1) mitlaufend geführt und im Arbeitsspielintervall zurückgeführt wird.

6. Verfahren nach Anspruch 4 oder 5, dadurch gekennzeichnet, daß in Durchlaufrichtung hinter der Stanzvorrichtung (20) eine Andrückvorrichtung (26) mit Form-Druckrollen (27) angeordnet ist, welche ein zum Kantenprofil der Werkstücke (1) mit ihren profilierten und beschichteten Kanten (2, 3) vorbeigeführt werden.

7. Verfahren nach Anspruch 1, dadurch gekennzeichnet, daß zum Abstanzen oder Abschneiden eine Stanzvorrichtung mit einem gegenüber einer Werkstückauflage verschiebbaren Schneidwerkzeug verwendet wird, wobei das Schneidwerkzeug (106) ein senkrecht oder geneigt zur Auflageebene der Werkstückauflage (102) sowie auf die Gehrungskante (105) des betreffenden Werkstücks (101) ausrichtbares Messer (106) ist, wobei die Schneide (103) bzw. der in Eingriff stehende Schneidenabschnitt des Messers (106) kürzer als die Schnittkante am Deckstreifen (104) entlang der Gehrungskante (105) ist und das Messer (106) an zumindest einer zur Werkstückauflage (102) parallelen Führung (111, 112) in Richtung der Gehrungskante (105) verschieblich gelagert und mittels einer Hubvorrichtung (109) senkrecht zur Werkstückplattenebene zustellbar ist.

8. Verfahren nach Anspruch 7, dadurch gekennzeichnet, daß das Messer (106) an einem Kreuzsupport (110) aufgehängt ist.

9. Verfahren nach Anspruch 8, dadurch gekennzeichnet, daß an dem Kreuzsupport (110) eine Hubvorrichtung (109) für das Messer (106) angeordnet ist.

10. Verfahren nach einem der Ansprüche 7 bis 9, dadurch gekennzeichnet, daß das Messer (106) mit einer feststehenden Schneide (103) oder Schneidenspitze ausgestattet ist.

11. Verfahren nach einem der Ansprüche 7 bis 9, dadurch gekennzeichnet, daß das Messer (106) eine Schneidrolle mit einer umlaufenden Schneide besitzt.

12. Verfahren nach einem der Ansprüche 7 bis 11, dadurch gekennzeichnet, daß zumindest an einer Seite des Messers (106) neben der Schneide (103) eine Stützrolle (115) oder -kufe angordnet ist.

13. Verfahren nach einem der Ansprüche 7 bis 12, dadurch gekennzeichnet, daß am Messer (106) in Schnittrichtung hinter der Schneide (103) eine quer zur Schnittrichtung über die Schneide (103) vorstehende Andruckrolle angeordnet ist.

**Claims**

1. Process for the attachment of an uneven, so-called soft-formed edge profile and of a cover strip (4) of veneer wood or plastic on top to the edges (2, 3) at an angle to each other of square or rectangular workpieces in the form of boards of wood or woodlike material, such as furniture front panels, by means of a machine continuously working the workpieces (1), the edge profile first being cut out on the respective workpieces (2, 3), then the cover strip (4) brought from a continuous supply and applied with close contact to the edge profile, at the same time stuck on and cut to length at the workpiece corners, characterized in that first of all the one parallel workpiece edges (3) are cut to shape, then the workpiece edges (2) running transversely thereto are cut to shape and the cover strip (4) is applied to the edge profile of the latter with an overhang beyond the mitred edges (5) formed by the edge profiles converging at the workpiece corners and is punched off or cut off along a cutting plane, which is defined by the mitred edge (5) and a perpendicular to the plane of the workpiece board, and subsequently the cover strip (4) is applied to the edge profile of the first cut-to-shape workpiece edges (3) and punched or cut off at the workpiece corners along one of the abovementioned cutting planes.

2. Process according to Claim 1, characterized in that, for the punching-off or the cutting-off, a punching apparatus (20) having a punching knife (6) which can be displaced and aligned with respect to a workpiece holder is used, the cutting edge (7) of which coincides wi th the contour of the mitred edge.

3. Process according to Claim 2, characterized in that, next to the punching knife (6), there is an arranged pressed piece (8), which can be displaced at the same time as the knife and has, at least in the region directly next to the cutting edge (7), a pressing surface or edge (9) set back from the cutting edge by a distance equal to the thickness of the cover strip (4).

4. Process according to Claim 2 or 3, characterized in that the punching apparatus (20) is integrated in a continuous machine (10).

5. Process according to Claim 4, characterized in that the punching apparatus (20) moves along with the workpieces and is returned during the working cycle interval.

6. Process according to Claim 4 or 5, characterized in that a pressure-applying device (26) with shaped pressure rollers (27) is arranged behind the punching apparatus (20) in running direction, which rollers are moved along the edge profile of the workpieces (1) with their profiled and coated edges (2, 3).

7. Process according to Claim 1, characterized in that, for the punching-off or cutting-off, a punching apparatus having a cutting tool which can be displaced with respect to a workpiece holder is used, the cutting tool (106) being a knife (106) which can be aligned perpendicular or at an angle to the supporting level of the workpiece holder (102) and to the mitred edge (105) of the workpiece (101) concerned, the cutting edge (103) or the cutting edge section of the knife (106) in engagement being shorter than the cut edge on the cover strip (104) along the mitred edge (105) and the knife (106) being mounted displaceably in the direction of the mitred edge (105) on at least one guide (111, 112) parallel to the workpiece holder (103) and adjustable perpendicularly towards the plane of the workpiece board by means of a lifting device (109)

8. Process according to Claim 7, characterized in that the knife (106) is suspended on a cross slide (110).

9. Process according to Claim 8, characterized in that a lifting device (109) for the knife (106) is arranged on on the cross slide (110).

10. Process according to one of Claims 7 to 9, characterized in that the knife (106) is equipped with a fixed cutting edge (103) or cutting tip.

11. Process according to one of Claims 7 to 9, characterized in that the knife (106) has a cutting roller with a cutting edge around it.

12. Process according to one of Claims 7 to 11, characterized in that a supporting roller (115) or supporting skid is arranged at least on one side of the knife (106) next to the cutting edge (103).

13. Process according to one of Claims 7 to 12, characterized in that a pressure roller, projecting transversely to the cutting direction and beyond the cutting edge (103) is arranged on the knife (106), behind the cutting edge (103) in the cutting direction.

## Revendications

1. Procédé pour former des bords non plans d'un profil dit arrondi et appliquer par-dessus ces bords (2, 3) qui sont disposés sous un certain angle, une bande de recouvrement (4) en bois de placage ou en matière plastique sur des pièces carrées ou rectangulaires en forme de plaques de bois ou de matière ligneuse, telles que des panneaux frontaux de meubles, au moyen d'une machine qui traite les pièces (1) de manière continue, en taillant d'abord dans les pièces respectives, les profits de bords (2, 3), puis en amenant la bande de recouvrement (4) à partir d'une alimentation continue en l'appliquant en contact étroit sur le profit de bord et en procédant en même temps à son collage et à sa coupe à longueur aux coins de la pièce, caractérisé en ce qu'en tout premier lieu, les premiers bords parallèles (3) de la pièce sont taillés en forme, puis les bords (2) qui y sont transversaux sont taillés en forme et la bande de recouvrement (4) est appliquée sur le profit de bord de ces derniers avec un surplomb au-delà des arêtes d'onglets (5) formées par les profils de bords qui convergent dans les coins de la pièce et est sectionnée ou coupée suivant un plan de coupe qui est défini par l'arête d'onglet (5) et une perpendiculaire au plan de la plaque formant la pièce, puis la bande de recouvrement (4) est appliquée sur le profit de bord des premiers bords taillés en forme (3) et est sectionnée ou coupée au niveau des coins de la pièce suivant l'un des plans de coupe précités.

2. Procédé suivant la revendication 1, caractérisé en ce que pour le sectionnement ou la coupe, on utilise un appareil sectionneur (20) comportant un couteau sectionneur (6) qui peut être déplacé ou aligné par rapport à un portepièce, et dont le tranchant (7) coïncide avec le contour de l'arête d'onglet.

3. Procédé suivant la revendication 2, caractérisé en ce que, à côté du couteau sectionneur (6) est prévue une pièce de compression (8) qui peut être déplacée en même temps que le couteau et qui comporte, au moins dans la région directement adjacente au tranchant (7), une surface ou un bord de pressage (9) en retrait par rapport au tranchant d'une distance égale à l'épaisseur de la bande de recouvrement (4).

4. Procédé suivant la revendication 2 ou 3, caractérisé en ce que l'appareil sectionneur (20) est intégré dans une machine continue (10).

5. Procédé suivant la revendication 4, caractérisé en ce que l'appareil sectionneur (20) accompagne les pièces et est renvoyé pendant l'intervalle entre les cycles de travail

6. Procédé suivant la revendication 4 ou 5, caractérisé en ce qu'un dispositif applicateur de pression (26) comportant des rouleaux presseures façonnés (27) est disposé derrière l'appareil sectionneur (20), dans le sens d'avancement, ces rouleaux étant déplacés suivant le profil le bord des pièces (1) pourvus de leurs bords (2, 3) profilés et revêtus.

7. Procédé suivant la revendication 1, caractérisé en ce qu'on utilise pour le sectionnement ou la coupe, un appareil sectionneur comportant un outil de coupe qui peut être déplacé par rapport à un porte-pièce, l'outil de coupe (106) étant un couteau (106) qui peut être aligné perpendiculairement ou sous un certain angle par rapport au niveau de support du porte-pièce (102) et à l'arête d'onglet (105) de la pièce (101) en question, le tranchant (103) ou la section de tranchant du couteau (106) qui se rouve en contact étant plus court que le bord de coupe de la bande de recouvrement (104) le long de l'arête d'onglet (105) et le couteau (106) étant monté déplacable dans le sens de l'arête d'onglet (105) sur au moins un guide (111, 112) parallèle au porte-pièce (103) et étant réglable perpendiculairement en direction du plan de la plaque formant pièce au moyen d'un dispositif élévateur (109).

8. Procédé suivant la revendication 7, caractérisé en ce que le couteau (106) est suspendu sur un coulisseau transversal (110).

9. Procédé suivant la revendication 8, caractérisé en ce qu'un dispositif élévateur (109) pour le couteau (106) est disposé sur le coulisseau transversal (110).

10. Procédé suivant l'une quelconque des revendications 7 à 9, caractérisé en ce que le couteau (106) est équipé d'un tranchant (103) ou d'une extrémité de coupe fixe.

11. Procédé suivant l'une quelconque des revendications 7 à 9, caractérisé en ce que le couteau (106) comporte une molette de coupe présentant un tranchant circonférentiel.

12. Procédé suivant l'une quelconque des revendications 7 à 11, caractérisé en ce qu'un galet de support (115) ou un patin de support est disposé au moins d'un côté du couteau (106) près du tranchant (103).

13. Procédé suivant l'une quelconque des revendications 7 à 12, caractérisé en ce qu'un galet de pression, qui s'étend transversalement à la direction de coupe et au-delà du tranchant (103) est prévu sur le couteau (106), derrière le tranchant (103), dans la direction de coupe.

Fig.1

Fig.2

0 143 882

Fig. 4

Fig. 3

Fig.5

Fig.6